(19) Europäisches Patentamt
European Patent Office
Office européen des brevets

(11) **EP 2 735 924 A1**

(12) **EUROPEAN PATENT APPLICATION**

(43) Date of publication:
**28.05.2014 Bulletin 2014/22**

(51) Int Cl.:
**G05B 13/04** (2006.01)

(21) Application number: **13166342.9**

(22) Date of filing: **03.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology Ltd**
**8050 Zürich (CH)**

(72) Inventors:
• **Moden, Per-Erik**
**724 62 Västerås (SE)**

• **Hjalmarsson, Håkan**
**131 33 Nacka (SE)**
• **Bombois, Xavier**
**2496 TN Den Haag (NL)**

(74) Representative: **Savela, Reino Aleksi**
**ABB AB**
**Intellectual Property**
**Ingenjör Bååths Gata 11**
**721 83 Västerås (SE)**

(54) **Providing improvements in relation to a model of a process**

(57)     The invention is related to a method, excitation arrangement, control device, control system and computer program product for providing improvements in relation to a model of a process (28) being controlled in a process control system. The excitation arrangement comprises an excitation signal generator (34) generating an excitation signal (**r**) , an adding unit (36) for adding the excitation signal to an output signal (uc) from the control device for obtaining an input control signal (**u**) to the process (28) having an excitation signal contribution (**r**) and an adjusting unit (38) configured to receive a process response (**y**), adjust the process response through removing an estimated influence of the excitation signal contribution (**r**), and supply the adjusted process response (**yc**) to the control device.

FIG. 2

**Description**

FIELD OF THE INVENTION

The invention relates to the field of process control systems. The invention more particularly concerns a method, excitation arrangement, control device, control system and computer program product for providing improvements in relation to a model of a process being controlled in the process control system.

BACKGROUND OF THE INVENTION

Model based control is a powerful tool used in process control systems. Model based control is for instance described in WO 2007/001252.
Model based control - for example model predictive control (MPC) - relies on having a model that mimics the behaviour of the actual controlled process well enough. Directly after commissioning, this is normally the case. But usually reality starts to diverge from the model so that within a few months, or at most a couple of years, it becomes necessary to update the model. To do this it would be preferable to make closed loop identification experiments which do not disturb the production more than necessary. If there is an indication about the way the model has become uncertain, the experiment should be designed to excite optimally with respect to that. This means that the desired spectrum is defined. But when the excitation is applied in a closed loop, the feedback will counteract the excitation, so the desired excitation spectrum is not obtained. In the case of completely linear control, it is possible to calculate what additional signal should be supplied in order to get the desired excitation spectrum in closed loop. However, this approach is usually not feasible with MPC.
Currently there are basically two routes for process identification, when the model needs to be updated or changed:
To excite in open loop. Then the desired spectrum is obtained, but also the disadvantages of operating in open loop during the whole experiment.
To apply the excitation in closed loop, ignoring the influence of the feedback on the achieved excitation spectrum. Then the desired excitation is not obtained, and thus the data obtained for model identification will be less informative.
None of these two routes provides both the desired excitation spectrum and operation in closed loop. Operation in open loop implies greater risk of losing production during the experiment. Operation in closed loop, but with an excitation spectrum different from the desired one means that you need a longer experiment or higher excitation power to get enough information for the required accuracy of the model when updated by identification.
The provision of an excitation signal in an MPC controller in a closed-loop MPC control system is for instance described by Renato N. Pitta and Darci Odloak in "Closed-loop re-identification of an industrial debutanizer column", 8th IFAC Symposium on Advanced Control of Chemical Processes, Singapore July 2012, Singapore, July 10-13, 2012.
In "Design and application of generalized predictive control strategy with closed-loop identification for burn through point in sintering process", Control Engineering Practice 20 (2012) Min Wu, Chunseng Wang, Weihua Cao, Xuzhi Lai and Xin Chen discuss the provision of an external signal r2(t) during closed-loop identification.
US2006/0111858 discusses the provision of test signals during an MPC closed-loop plant test.
However, there is still a need for improvement within the field.

SUMMARY OF THE INVENTION

It is therefore an objective of the invention to improve the obtaining of reliable data during process control in order to provide improvements in relation to the model used in the control.
This object is according to a first aspect of the invention achieved through a method for providing improvements in relation to a model of a process being controlled in a process control system, the process control system being controlled via a control device using the model, the method comprising the steps of:

  providing an excitation signal,
  adding the excitation signal to an output signal from the control device for obtaining a control signal to the process having an excitation signal contribution,
  receiving a process response,
  adjusting the process response, said adjusting comprising removing an estimated influence of the excitation signal contribution on the process response, and
  supplying the adjusted process response to the control device.

A second aspect of the invention is directed to an excitation arrangement for providing improvements in relation to a model of a process being controlled in a process control system, the process being controlled via a control device using the model, the excitation arrangement comprising:

an excitation signal generator generating an excitation signal,
an adding unit for adding the excitation signal to an output signal from the control device for obtaining a control signal to the process having an excitation signal contribution, and
an adjusting unit configured to receive a process response, adjust the process response through removing an estimated influence of the excitation signal contribution, and supply the adjusted process response to the control device.

A third aspect of the invention is directed towards a control device comprising the excitation arrangement according to the second aspect.

A fourth aspect is directed towards a process control system comprising an excitation arrangement according to the third aspect.

A fifth aspect of the invention is directed to a computer program product providing improvements in relation to a model of a process being controlled in a process control system, the process being controlled via a control device using the model, the computer program product comprising a data carrier with computer program code being loadable into one or more internal memories of one or more computer, the computer program code causing the one or more computers to, when being loaded in the one or more internal memories,

provide an excitation signal,

add the excitation signal to an output signal from the control device for supply as a control signal to the process,

receive a process response,

adjust the process response through removing the influence of the excitation signal from the process response, and supply the adjusted process response to the control device.

The invention according to these aspects has a number of advantages. It provides improvements in relation to the mathematical model of the process that is controlled. For instance, process responses can be obtained when the control signal comprises the excitation signal. Excitation is thereby possible when the process is controlled in a closed loop. Through the removal of the estimated influence of the excitation signal on the process response, it is furthermore possible that the excitation signal will have full influence on the process response which will be an advantage when making improvements in relation to the model. However, since these influences are not allowed to reach the control device, the control as such will not be influenced. Furthermore, the control device will in this way be stopped from distorting the excitation signal. Thereby higher quality data is obtained compared with if the effects of the excitation signal are not removed.

BRIEF DESCRIPTION OF THE DRAWINGS

The subject matter of the invention will be explained in more detail in the following text with reference being made to preferred exemplary embodiments which are illustrated in the attached drawings, of which:

Fig. 1 schematically shows a process control system comprising a control computer for controlling an industrial process,
Fig. 2 shows a block schematic of a control device, an excitation arrangement according to a first embodiment and elements representing the process and external influences on the process,
Fig. 3 shows a flow chart outlining a number of method steps of a method according to the first embodiment being performed by the excitation arrangement in fig. 2,
Fig. 4 shows a block schematic of the control device, an excitation arrangement according to a second embodiment and elements representing the process and external influences on the process,
Fig. 5 shows a flow chart outlining a number of method steps of a method according to the second embodiment being performed by the excitation arrangement in fig. 4,
Figure 6 shows a block schematic of the control device together with an excitation arrangement according to a third embodiment and elements representing the process and external influences on the process
Fig. 7 shows a flow chart outlining a number of method steps of a method according to the third embodiment being performed by the excitation arrangement in fig. 6, and
Fig. 8 schematically shows a computer program product comprising computer readable code which implements the excitation arrangement when loaded into a computer.

DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

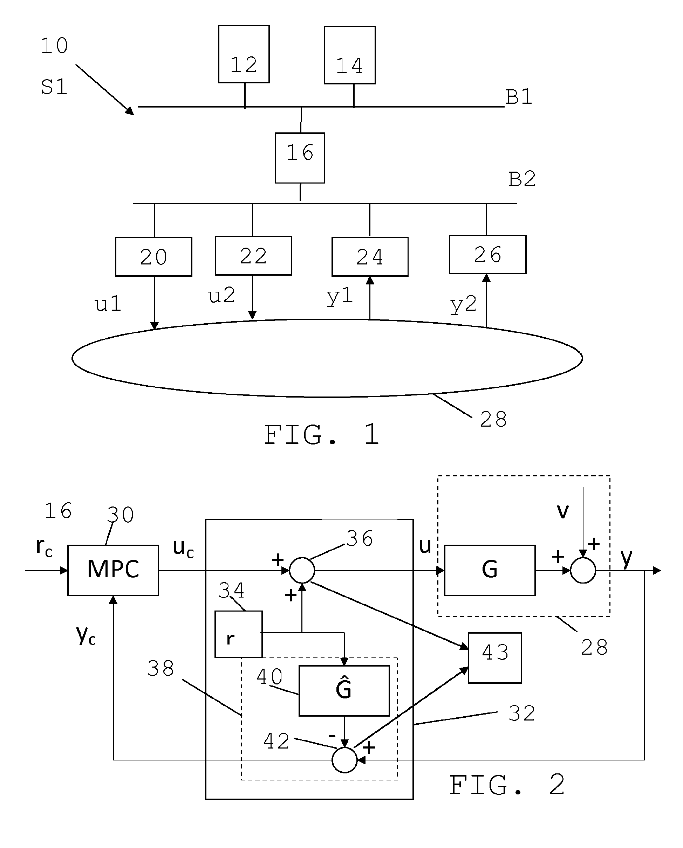

Fig. 1 schematically shows a control system 10 controlling a process 28 or a part of a process. The control system 10 is thus a process control system. The process 28 may be an industrial process and may furthermore be any of a number of different types of processes such as a pulp and paper production process, a water purification and distribution process, oil and gas production and distribution process, petrochemical, chemical, pharmaceutical and food process, an electric power transmission process or an electric power distribution process. These are just some examples of processes where the system 10 can be applied. There exist countless other processes.

In fig. 1 the process control system 10 includes a number of computers 12 and 14 connected to a first bus B1. There is here a first computer 12 that is a first operator terminal and a second computer that is an engineering terminal 14. There is furthermore a second bus B2 and between the first and second busses there is connected a control computer 16 providing control of the process 28. To the second bus B2 there are furthermore connected process interface devices 20, 22, 24 and 26 for providing control of the process 28. These devices are sometimes referred to as field devices and are also real world objects involved in the control of the process. They are thus controlled by the control computer 16. In the figure there are provided four such process interface devices 20, 22, 24 and 26 that interfaces the process 28. It should however be realized that there may be more or fewer of each of these devices. Such devices are thus all involved in controlling the process 28 and in doing this one or more may be involved in measuring physical properties related to the process. The measured properties may here be properties of the process itself such as a voltage of or current running in a power line or the pulp temperature of a pulp and paper process.

It should also be realised that there may be many more control computers as well as more engineering and operator terminals.

The control computer 16 normally has some local software for controlling one or more process interface devices, which may be different entities that influence the industrial or technical process, like such things as a pump, a motor, a valve, a tank etc. for instance realized through one or more of the process interface devices 20, 22, 24 and 26. This part of the control computer will in the following be termed a control device. The control computer will furthermore comprise an excitation arrangement. The details of which will also be described later. The process may also be monitored through the first operator terminal 12, which communicates with the control computer.

In fig. 1 the first and second process interface devices are shown as providing control signals u1 and u2 to the process, while the third and fourth process interface devices are shown as receiving process responses y1 and y2 from the process 28. A process response may thus be one or more measured properties of the process.

It should be realized that fig. 1 is simplified in that there may be a layer of controllers, for instance PID controllers, between the control computer and the process interface devices. The control computer may then provide set points for the controllers, which in turn control the process interface devices based on these set points.

Fig. 2 schematically shows a control device 30, an excitation arrangement 32 as well as elements representing the process and external influences on the process. The view in fig. 2 depicts a multiple input/output scenario, where the signals would be vectors of signal values. A control signal vector **u** may thus be made up both the control signals u1 and u2, while a process response **y** may be made up of both the signals y1 and y2 in fig. 1. Even though a multiple input/multiple output system is described, it should be realized that also other types of systems can be envisioned, such as a single input/single output, single input/multiple output or a multiple input/ single output system. In the following reference will be made to control signals, but then control signal vectors are contemplated. In the following there will also be reference to models which can be expressed in state space form or as transfer function matrices, to name just two of several possible alternatives.

In the control computer there is thus a control device 30 that is responsible for ordinary control, such as model predictive control (MPC). The control device 30 has a first input on which it receives a control target $r_C$, for instance from an operator. It also has a second input on which it receives a modified process response $y_C$. The control device 30 has a control signal output on which it provides an output signal $u_C$ that is delivered to the excitation arrangement 32. The excitation arrangement 32 comprises an excitation signal generator 34, an adding unit 36 and an adjusting unit 38. The excitation signal generator 34 provides an excitation signal **r** to the adding unit 36, which adding unit 36 also receives the output signal $u_C$ of the control device 30. The adding unit 36 forms a control signal **u**, which is thus the sum of the excitation signal **r** and the control device output signal $u_C$ and this control signal **u** is provided to the process 28, where the process is assumed to respond to its input **u** as an (unknown) model **G.** The process 28 provides a process output **y** which is composed by the output of **G** and additional noise **v.** Thus, the process output with added noise is a process response **y**. The adjusting unit 38 comprises a processing element 40 and a subtracting element 42, where the processing element receives the excitation signal **r,** processes it and provides the processed excitation signal to the subtracting element 42. The subtracting element 42 receives the process response **y** and subtracts the processed excitation signal from the process response. The result is provided as adjusted process response $\mathbf{y_C}$ that is then provided to the second input of the control device 30.

As described earlier the control signal **u** may be made up of a number of set points for controlling controllers in a layer of controllers. The process may therefore from the viewpoint of the control device 30 also be considered to comprise these controllers as well as the process interface devices

There is also a memory 43, in which the control signal **u** and the process response **y** get stored.

As was mentioned above, the control device employs a model based control of the process 28. This means that it uses a model of the process in the control device.

There are a number of ways in which model based control may be realized, where one is outlined below.

The process may be modeled according to $\hat{y} = \hat{G}\,u$, where $\hat{G}$ is a mathematical model for example in the form of a matrix including a number of transfer functions, $\hat{y}$ is a vector of estimated measurement values and $u$ is a vector of control signal values. $\hat{G}$ resembles the unknown model **G** that describes the true behavior of the process. As alternative to transfer functions the model $\hat{G}$ can for example take the form of a state space model, which can be linear or non-linear.

The input signal u is applied in a set of system equations provided through the model $\hat{G}$ of the process. This may be done through using a number q of states x, which number q may as an example be 50. The equations may be provided in a state space that is dependent on the number of states. The equations may here be non-linear equations or linear equations, which define the relationship between values of estimated measurement quantities, states of the system and the control signals. The equations thus identify relationships between system states, control signal values and estimated measurement values or system response values. The values of several different estimated measurement quantities and several different control signals may then be entered into these equations.

If there are n process responses or estimated quantities, q states and p inputs or control signals, then the equations may be generally expressed as:

$$x_{k+1} = F_1(x_k) + F_2(u_k) \tag{1}$$

$$\hat{y}_k = F_3(x_k) + F_4(u_k) \tag{2}$$

where k is a current instance in time being examined $\hat{y}_k$ is an estimated process response or measurement value vector with size n at an instance in time k, $x_k$ is state vector of size q at the instance in time k, $x_{k+1}$ is a state vector of size q at the instance in time k+1, $u_k$ is a control signal vector of size p, $F_1(x_k)$ and $F_3(x_k)$ are vector values functions of dimension q and n, respectively, of the states x at the instance in time k, while $F_2(u_k)$ and $F_4(u_k)$ are vector values functions of dimension q and n, respectively, of control signals u at the instance in time k. Here the functions can be non-linear but also linear.

If the functions are linear, the equations can furthermore be simplified as:

$$x_{k+1} = A * x_k + B * u_k \tag{3}$$

$$\hat{y}_k = C * x_k + D * u_k \tag{4}$$

where A, B, C and D are matrices with desirable system constants of the model. The transfer function $\hat{G}$ may then be obtained through knowledge about the matrices A, B, C and D.

The control device thus applies a model $\hat{G}$ that mimics the actual transfer function **G** of the process.

Based on the control target $\mathbf{r_C}$, the control device 30 thus controls the process 28 using the model $\hat{G}$ of the process and in this control receives a process response **y** which is used in the further control.

As was mentioned earlier, the model $\hat{G}$ is typically fairly accurate in the beginning of operation. However, it will after some time not truly reflect the actual transfer function **G** of the process. It will thus deviate from reality. Reality may for instance start to diverge from the model so that within a few months, or at most a couple of years, the model may not be accurate. It may need to be updated or even changed. In order to do this new data needs to be obtained from the system.

One way of obtaining data for use in such model update or change is through providing an excitation signal that is added to the control signal and used during the closed loop control. This is of interest for several reasons, where one is that it may be desirable to maintain production and another may be that data obtained in closed loop will better reflects the true properties of the process as it is operated normally. However, there is a problem with this approach and that is that the excitation signal also influences the control. This means that the control system also acts on the responses to the excitation, which may lead to a control signal from the control device that in part is a countermeasure to the effects of the excitation signal. This will in turn lead to a process response that to a lower degree reflects the effect of the intended excitation. This will give less informative data, and thus make the model updating less efficient, compared to the case that the same excitation had been fed in open loop.

The invention is provided for addressing this problem.

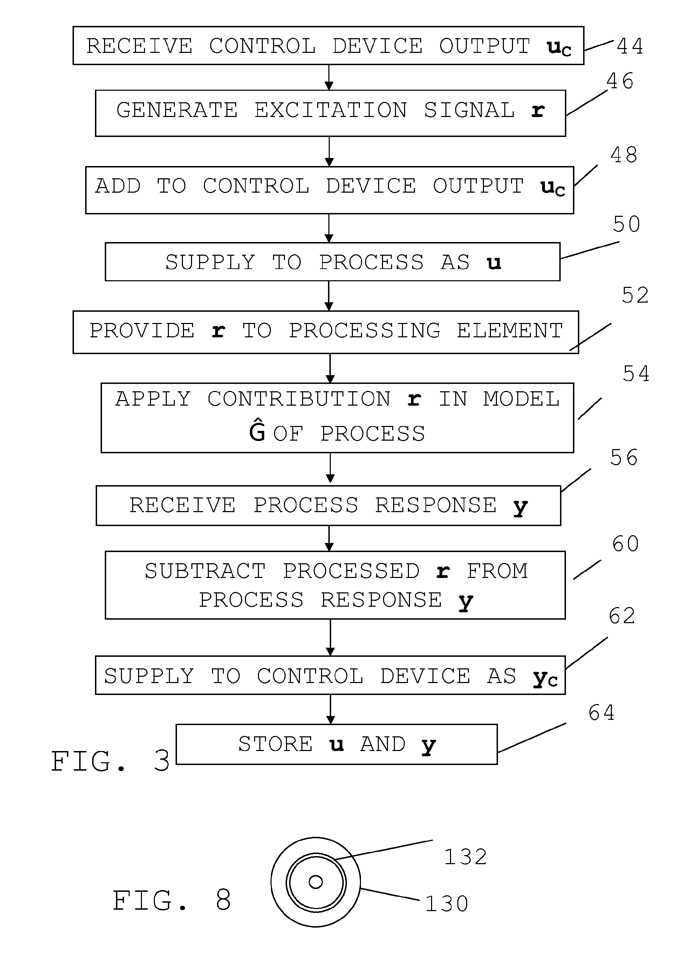

A first embodiment of the invention will therefore now be described with reference being made to fig. 1 - 2 together with fig. 3, which shows a flow chart outlining a number of method steps of a method according to the first embodiment being performed by the excitation arrangement 32.

The adding unit 36 of the excitation arrangement 32 receives the output signal $u_C$ from the control device 30 or the control device output $u_C$, step 44, i.e. a signal intended as a control signal by the control device 30. This output signal $u_C$ is thus a signal determined based on the model $\hat{G}$, a process response $y_C$ and a control target $r_C$.

The excitation signal generator 34 at the same time generates an excitation signal **r,** step 46, which signal **r** is also provided to the adding unit 36 as well as to the adjusting unit 38.

The excitation signal **r** may be provided in the form of a pulse train, i.e. a series of pulses set to excite various states of the process. The pulses of the excitation signal **r** may also be provided at a pulse rate set to excite various system modes. The optimal choice of such a signal is dependent on the model and its assumed accuracy and may thus vary considerably.

The adding unit 36 then adds the excitation signal to the control device output signal $u_C$, step 48. The resulting signal, i.e. the signal that is the result of this adding operation, is then provided as a control signal **u** to the process 28, step 50. The control signal is thus a signal having a contribution from the excitation signal. The process 28 is affected by the control signal in a way which we can describe with the (unknown) model **G** and unknown noise **v.** The process thus provides an output signal that depends on the model **G.** This output signal is the result of the application of the control signal **u** in the model **G,** such as **G\*u,** with addition of noise **v.** The sum forms the process response **y.** The process response **y** is thus a response to the control signal **u** made by the process 28.

Apart from being added to the control device output signal $u_C$ and supplied to the process 28, the excitation signal **r** is also provided to the processing element 40 of the adjusting unit 38, step 52. In the processing element the influence of the excitation signal on the process is estimated. The processing element more particularly estimates the influence that the contribution of the excitation signal to the control signal has on the process. Since the whole excitation signal was used in the control signal in the first embodiment, then the contribution is 100% in this case. This estimation is done through processing the excitation signal. This is done through applying the excitation signal in a model of the process, which in this first embodiment is done through applying the excitation signal **r** in the model $\hat{G}$ of the process used by the control device 30, step 54. The applying may in this case involve a multiplication of the excitation signal **r** with the transfer function corresponding to $\hat{G}$. In order to perform the operation, the adjusting unit 38, or rather the processing element 40 of the adjusting unit 38, may also previously have communicated with the control device 30 in order to receive the model $\hat{G}$. The processed excitation signal is then provided to the subtracting element 42.

The subtracting element 42 also receives the process response **y,** step 56. The subtracting element 42 then subtracts the processed excitation signal from the process response **y,** step 60 and supplies the result as adjusted process response $y_C$ to the control device 30, step 62.

The adding unit 36 and the subtracting element 42 may also store the control signal **u** and the control signal response **y** in the memory 43, step 64. In this way the response and the control signal can be used later in order to provide improvement in relation to the mathematical model. They may for instance be used for improving the current model $\hat{G}$. However the data may as an alternative be used for forming a completely new model.

The invention provides improvements in relation to the mathematical model of the process that is controlled in the process control system. For instance, as can be seen above, process responses can be obtained when the control signal comprises the excitation signal. Excitation is thus possible when the process is controlled in a closed loop. Through the removal of the estimated influence of the excitation signal on the process response, it is furthermore possible that the excitation signal will have full influence on the process response, which will be an advantage when making improvements in relation to the model. However, since these influences are not allowed to reach the control device, the control as such will not be influenced. It is thus possible to continue controlling the process according to desired control targets. Furthermore, the control device will in this way be stopped from distorting the excitation signal, which it may otherwise do. It can also be seen that higher quality data is obtained compared with if the effects of the excitation signal are not removed.

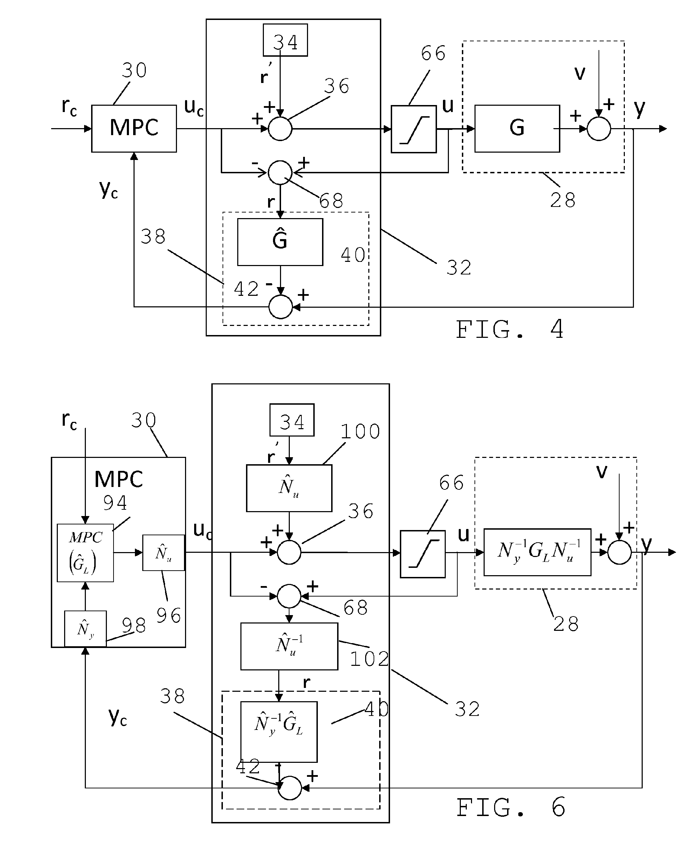

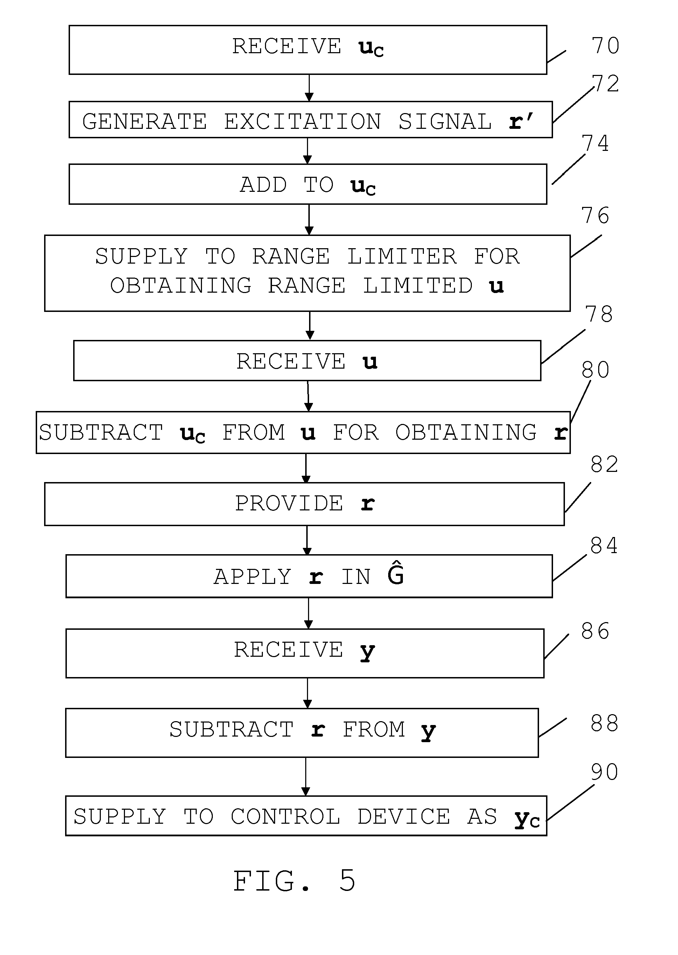

Now a second embodiment will be described with reference being made to fig. 4 and 5, where fig. 4 shows a block schematic of the control device 30 together with an excitation arrangement 32 according to a second embodiment and elements representing the process and external influences on the process and fig. 5 shows a flow chart outlining a number of method steps of a method according to the second embodiment being performed by this excitation arrangement 32.

The elements shown in fig. 4 differ from those in fig. 2 in that the control system comprises an input range limiter 66 between the system 28 and the adding unit 36. The limiter 66 is here shown as a separate entity in the system. However, it may as one alternative be a part of the control device 30. As another alternative it may be a part of the excitation arrangement 32. The limiter 66 has an output that faces the process 28. This limiter 66 provides a limitation to the range of the control signal **u.** This will have an impact on the removal of the influence of the excitation signal. In order to handle this situation, the excitation arrangement 32 comprises a subtracting unit 68 connected between the output of the input range limiter 66 and the output of the control device 30. The subtracting unit 68 is thereby connected in a branch in parallel with a branch comprising the adding unit 36 and the limiter 66. The excitation signal generator 34 is not connected to the combination of adding unit 36 and adjusting unit 38. Instead it is only connected to the subtracting unit 68. Furthermore, also the memory has been omitted from fig. 4.

The method being performed in the second embodiment is the following.

The adding unit 36 of the excitation arrangement 32 receives the control device output **u_C,** step 70. The excitation signal generator 34 generates an excitation signal **r',** step 72. Both these signals are provided to the adding unit 36.

The adding unit 36 then adds the excitation signal **r'** to the control device output signal **u_C,** step 74. The obtained signal is then provided to the input range limiter 66, step 76, for obtaining a range limited control signal **u.** The range limiter 66 may for this reason apply a possible input range limitation. In the case of a single control signal, the range may for instance have a minimum and a maximum value. If then the control signal would be below the minimum value after addition of the excitation signal **r'** or be above the maximum value after the addition of the excitation signal **r',** the control signal would be limited to the range by the range limiter 66 accordingly. This means that only a part of the excitation signal **r'** or none of the excitation signal may in fact be input to the system. There is thus an excitation signal contribution being made, which may vary between a percentage of zero and one hundred, and it is the effect of this excitation signal contribution that has to be removed from the process response.

Therefore the subtracting unit 68 receives the range limited or actually applied control signal **u** from the output of the range limiter 66, step 66, as well as the output signal **u_C** of the control device 30. The subtracting unit 68 then subtracts the output signal **u_C** from the control signal **u** and thereby obtains the excitation signal contribution **r,** step 80. The subtracting unit 68 then provides the contribution **r** to the processing element 40 of the adjusting unit 38, step 82. In the processing element 40 the influence of the excitation signal contribution **r** to the process is then estimated. This may, just as in the first embodiment, be done through applying the excitation signal contribution **r** in the model $\hat{G}$ of the process 28, step 84. The processed excitation signal contribution is then provided to the subtracting element 42.

The subtracting element 42 also receives the process response **y**, step 86, and then subtracts the processed excitation signal contribution from the process response **y**, step 88, and supplies the result as adjusted process response **y_C** to the control device 30, step 90.

This may again be followed by the subtracting unit 68 and the subtracting element 42 storing the actual control signal **u** and the process response **y** in a memory (not shown).

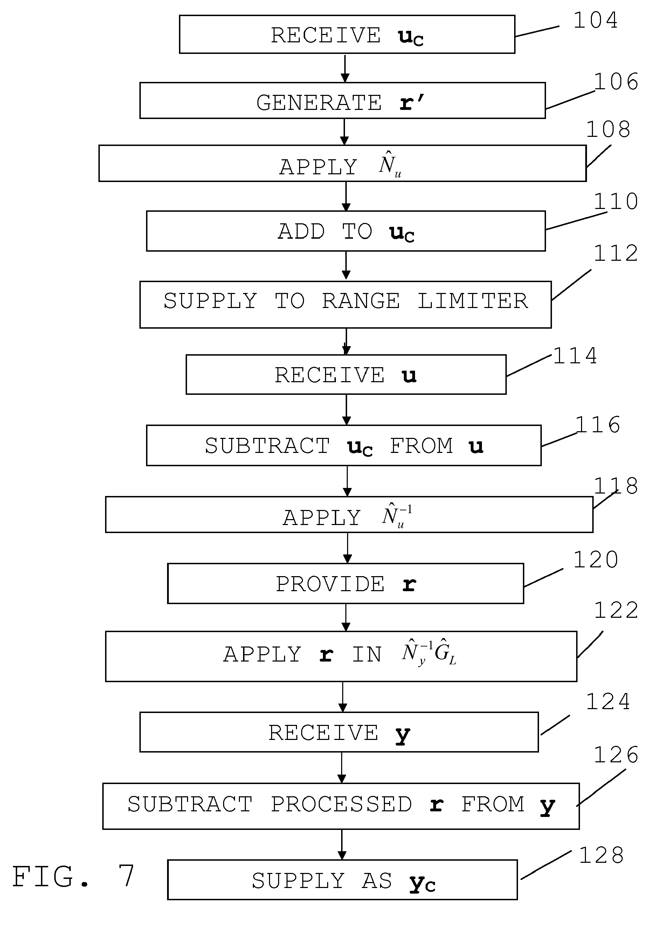

Now a third embodiment will be described, with reference being made to fig. 6 and 7, where fig. 6 shows a block schematic of the control device 30 together with an excitation arrangement 32 according to the third embodiment and elements representing the process and external influences on the process and fig. 7 shows a flow chart outlining a number of method steps of a method according to the third embodiment being performed by this excitation arrangement.

The process 28 in fig. 6 is a non-linear process. The process 28 may because of this be considered to have a linear dynamic transfer function G_L, a non-linear static input function $N_u^{-1}$ and a non-linear static output function $N_y^{-1}$.

The total input response of the process can then be described by $N_y^{-1} G_L N_u^{-1}$. In order to handle this the control device 30 has a linear processing unit 94 providing a linear dynamic model $\hat{G}_L$ of the linear function, a first non-linear processing unit 96 providing a first non-linear static function $\hat{\hat{N}}_u$ for the control signals and a second non-linear processing unit 98 providing a second non-linear static function $\hat{N}_y$ for the process response, where the first non-linear static function $\hat{N}_u$ of the control device 30 mimics the inverse of the static input function of the process 28 and the second non-linear static function $\hat{N}_y$ of the control device mimics the inverse of the non-linear output function of the process. This also means that the input function $N_u^{-1}$ of the process is (ideally) the inverse of the first non-linear function $\hat{N}_u$ of the control device and the output function $N_y^{-1}$ of the process is (ideally) the inverse function of the second non-linear function $\hat{N}_y$ of the control device. This is also the way in which they are shown in fig. 6. The models and the functions of the control device are furthermore estimates. As can be seen in fig. 6, the control device 30 receives the control target $r_C$. It also receives the adjusted system response $y_C$, which is processed using the second static function $\hat{N}_y$. The processed adjusted system response and the control target are then processed using the linear model $\hat{G}_L$. The results of this processing are then provided to the first static function $\hat{N}_u$, which in turn provides the output signal $u_C$.

In order to be able to remove the influence of the excitation signal on the process response, the exciting arrangement 32 comprises a first function processing unit 100 connected between the excitation signal generator 34 and the adding unit 36 and an input function processing unit 102 connected between the subtracting unit 68 and the processing element 40.

The method being performed is the following.

The adding unit 36 of the excitation arrangement 32 receives the control device output $u_C$, step 104. The excitation signal generator 34 also generates an excitation signal r', step 106. This excitation signal r' is then provided to the first function processing unit 100, which applies the first non-linear static function $\hat{N}_u$ on the generated excitation signal, step 108, for obtaining a processed excitation signal. This may be done through evaluation of a multivariable non-linear function expression representing $\hat{N}_u$ for the argument r'. As an alternative table look-up possibly combined with interpolation may be used instead. The function used may be the same first non-linear static function as that employed in the control device 30. The first function processing unit 100 may for this reason have previously communicated with the control device 30 in order to obtain the input function. The processed excitation signal and the output signal $u_C$ are then both provided to the adding unit 36.

The adding unit 36 then adds the processed excitation signal to the control device output signal $u_C$, step 110. The obtained signal is then provided to the input range limiter 66, step 112, which applies a possible input range limitation in order to obtain the control signal **u.**

In order to handle the removal of the excitation signal contribution, the subtracting unit 68 receives the actually applied control signal **u** from the output of the range limiter 66, step 114, as well as the output signal $u_C$ from the control device 30. The subtracting unit 68 then subtracts the output signal $u_C$ from the control signal **u**, step 116. The result of this operation is then provided to the input function processing unit 102, which goes on and applies an estimation of the input function $\hat{N}_u^{-1}$, step 118, in order to convert the remaining excitation signal contribution to its linearized counterpart **r.** The result of the subtracting operation may in this case be the argument at which the multivariable input function estimate $\hat{N}_u^{-1}$ will be evaluated. This input function $\hat{N}_u^{-1}$ is thus an estimate of the input function $N_u^{-1}$ representing part of the process 28. In order to obtain this function $\hat{N}_u^{-1}$, the input function processing unit 102 may have previously communicated with the control device 30 or the first function processing unit 100 for obtaining the function $\hat{N}_u$. Based on the function $\hat{N}_u$ the input function processing unit 102 would then determine the inverse function $\hat{N}_u^{-1}$. As an alternative the control device 30 could determine the inverse function $\hat{N}_u^{-1}$ and supply it to the input function processing unit 102. The input function processing unit 102 then provides the contribution or the linearized counterpart of the contribution **r** to the processing element 40 of the adjusting unit 38, step 120. In the processing element 40 the influence of the excitation signal contribution on the process is then estimated. This is done through applying the excitation signal contribution **r** in the model $\hat{G}_L$ of the linear part of the process and in an estimate of the output function $\hat{N}_y^{-1}$, step 122. The estimate of the output function may be the inverse of the second non-linear static function. This may be done through feeding the excitation signal contribution **r** to the model $\hat{G}_L$ and let the output of that define the arguments at which to evaluate the multivariable non-linear function expression representing $\hat{N}_y^{-1}$. As an alternative table look-up possibly combined with interpolation may be used instead. The processed excitation signal contribution is then provided to the subtracting element 42.

The subtracting element 42 also receives the process response **y,** step 124, and then subtracts the processed excitation signal contribution from the process response **y,** step 126, and supplies the result as adjusted process response

$\mathbf{y_C}$ to the control device 30, step 128.

This may again be followed by the subtracting unit 68 and the subtracting element 42 storing the actual control signal u and the process response y in a memory (not shown).

It should here be realized that the third embodiment may be varied in that it is possible to omit the limiter, in which case the subtracting unit 68 as well as the input function processing unit 102 would not be needed either. In this case the excitation signal generator 34 may be directly connected to both the input function processing unit 100 and the processing element 40.

Another possible variation of the invention is that the storing of the process control signal and process response in a memory need not be performed by the units and elements of the excitation arrangement. It is for instance possible that the control device has such functionality. This functionality may also be provided in other elements of the process control system.

The model used in the excitation arrangement may furthermore differ from the model used in the control device. They need thus not use the same model. In this case the functions used in the excitation arrangement may correspond to the functions used in the control device. A function in the excitation arrangement that corresponds to the first static non-linear function in the control device may perform the same type of activity. The functions in the excitation arrangement may thus at least correspond to functions in the control device. However, they may also be the same.

The excitation arrangement may be realized as a separate entity which is connected to the control computer when an update is needed with regard to a used model. It may forn instance be provided in the form of a plug-in module. However, it should also be realized that it may also be provided as a part of the control computer, perhaps as a part of the control device.

When being connected to the control device, the excitation arrangement need not be used continuously. It may only be used from time to time When the excitation arrangement is not needed, this may be achieved through avoiding application of an excitation signal or through using an excitation signal set to zero. It could also be achieved through completely bypassing the excitation arrangement.

The excitation arrangement may be provided in the form of computer program code in a program memory. This computer program code performs the functionality of the excitation arrangement when being run by a processor of a computer, such as a processor of the control computer. This computer program code may also be provided on a data carrier which performs the functionality of the excitation arrangement when being loaded into such a program memory. Fig. 8 schematically shows one such data carrier 130, in the form of a CD-ROM disc, which data carrier carries computer program code 132 for performing the activities of the excitation arrangement.

Whilst the foregoing description of the invention describes a system for power oscillation damping, the skilled person will be aware that further embodiments may be envisaged where power oscillation damping is not involved. Specifically, control schemes for remote voltage control and/or control schemes for avoiding loss of synchronism. Therefore the present invention is only to be limited by the following claims.

**Claims**

1. A method for providing improvements in relation to a model of a process (28) being controlled in a process control system (10), said process control system being controlled via a control device (30) using the model, the method comprising the steps of:

   providing (46; 72; 106) an excitation signal **(r; r')**,
   adding (48; 74, 110) the excitation signal to an output signal ($\mathbf{u_C}$) from the control device (30) for obtaining a control signal **(u)** to the process (28) having an excitation signal contribution **(r)**,
   receiving (54; 84; 124) a process response (**y**),
   adjusting the process response, said adjusting comprising removing (60; 88; 126) an estimated influence of the excitation signal contribution on the process response, and
   supplying (62; 90; 128) the adjusted process response ($\mathbf{y_C}$) to the control device.

2. The method according to claim 1, wherein the adjusting of the process response comprises processing (56; 86; 122) the excitation signal contribution and the removing of the estimated influence of the excitation signal contribution comprises subtracting the processed excitation signal contribution from the process response.

3. The method according to claim 2, wherein the processing of the excitation signal comprises applying the excitation signal in a model of the process.

4. The method according to claim 3, wherein the model is the same as that used by the control device.

5. The method according to any previous claim, wherein the control signal **(u)** is subjected to an input range limitation and the processing comprises subtracting (80; 116) the output signal **(u$_C$)** from the control signal **(u)** for obtaining the excitation signal contribution.

6. The method according to any of claims 1 - 4, wherein the whole excitation signal is used in the excitation signal contribution.

7. The method according to any of claims 3 - 6, wherein the model comprises a dynamic linear function, a first static non-linear function and a second static non-linear function, the method further comprising applying (108) a function at least corresponding to the first static non-linear function on the excitation signal being added to the output signal and the applying (122) of the excitation signal contribution comprises applying the excitation signal contribution to a function at least corresponding to an inverse of the second static non-linear function.

8. The method according to claim 7, when depending on claim 5, further comprising converting (118) the excitation signal contribution to a linearized counterpart, before said applying to the model of the system.

9. The method according to any previous claim, further comprising storing the input signal and output signal obtained during application of the excitation signal.

10. The method according to any previous claim, further comprising using the stored input signals and output signal for obtaining an improvement in relation to the mathematical model.

11. An excitation arrangement (32) for providing improvements in relation to a model of a process (28) being controlled in a process control system (10), said process being controlled via a control device (30) using the model, the excitation arrangement (32) comprising:

an excitation signal generator (34) generating an excitation signal **(r; r')** an adding unit (36) for adding the excitation signal to an output signal **(u$_C$)** from the control device for obtaining a control signal **(u)** to the process (28) having an excitation signal contribution **(r),** and

an adjusting unit (38) configured to receive a process response (**y**), adjust the process response through removing an estimated influence of the excitation signal contribution **(r),** and supply the adjusted process response (**y$_C$**) to the control device.

12. The excitation arrangement according to claim 11, wherein the adjusting unit comprises a processing element (40) configured to process the excitation signal for providing a processed excitation signal and a subtracting element (42) configured to subtract the processed excitation signal from the process response.

13. The excitation arrangement according to claim 12, wherein the processing element when being configured to process the excitation signal is configured to apply the excitation signal in a model of the process.

14. The excitation arrangement according to claim 13, wherein the model is the same as that used by control device.

15. The excitation arrangement according to any of claims 11 - 14, wherein the control system comprises an input range limiter (66) subjecting the control signal to the process to an input range limitation and further comprising a subtracting unit (68) configured to subtract the output signal **(u$_C$)** from the control signal (u) for obtaining the excitation signal contribution.

16. The excitation arrangement according to any of claims 13 - 15, wherein the model comprises a dynamic linear transfer function, a first static non-linear function and a second static non-linear output function, the arrangement further comprising a first function processing unit (100) configured to apply a function at least corresponding to the first static non-linear function on the input excitation signal and, the processing element is further configured to apply the excitation signal contribution in a function at least corresponding to an inverse of the second static non-linear function when being configured to process the excitation signal.

17. The excitation arrangement according to claim 16 when depending on claim 15, further comprising an input function processing unit 102 configured to convert the excitation signal contribution to a linearized counterpart before supplying it to the adjusting unit.

**18.** A control device (30) in a process control system (10) and controlling a process using a model of the process, the control device comprising an excitation arrangement (32) according to any of claims 11 - 17.

**19.** A process control system (10) controlling a process (28) using a model of the process (28), the process control system (10) comprising an excitation arrangement (32) according to any of claims 11 - 17.

**20.** A computer program product providing improvements in relation to a model of a process (28) being controlled in a process control system (10), said process being controlled via a control device (30) using the model, the computer program product comprising a data carrier (130) with computer program code (132) being loadable into one or more internal memories of one or more computer, said computer program code causing said one or more computers to, when being loaded in said one or more internal memory,
provide an excitation signal,
add the excitation signal to an output signal from the control device (30) for supply as a control signal to the process (28),
receive a process response,
adjust the process response through removing the influence of the excitation signal from the process response, and
supply the adjusted process response to the control device.

FIG. 1

FIG. 2

RECEIVE CONTROL DEVICE OUTPUT $\mathbf{u_C}$ — 44

GENERATE EXCITATION SIGNAL $\mathbf{r}$ — 46

ADD TO CONTROL DEVICE OUTPUT $\mathbf{u_C}$ — 48

SUPPLY TO PROCESS AS $\mathbf{u}$ — 50

PROVIDE $\mathbf{r}$ TO PROCESSING ELEMENT — 52

APPLY CONTRIBUTION $\mathbf{r}$ IN MODEL $\hat{\mathbf{G}}$ OF PROCESS — 54

RECEIVE PROCESS RESPONSE $\mathbf{y}$ — 56

SUBTRACT PROCESSED $\mathbf{r}$ FROM PROCESS RESPONSE $\mathbf{y}$ — 60

SUPPLY TO CONTROL DEVICE AS $\mathbf{y_C}$ — 62

STORE $\mathbf{u}$ AND $\mathbf{y}$ — 64

FIG. 3

FIG. 8

132

130

FIG. 4

FIG. 6

RECEIVE $\mathbf{u_C}$ — 70

GENERATE EXCITATION SIGNAL $\mathbf{r'}$ — 72

ADD TO $\mathbf{u_C}$ — 74

SUPPLY TO RANGE LIMITER FOR OBTAINING RANGE LIMITED $\mathbf{u}$ — 76

RECEIVE $\mathbf{u}$ — 78

SUBTRACT $\mathbf{u_C}$ FROM $\mathbf{u}$ FOR OBTAINING $\mathbf{r}$ — 80

PROVIDE $\mathbf{r}$ — 82

APPLY $\mathbf{r}$ IN $\hat{G}$ — 84

RECEIVE $\mathbf{y}$ — 86

SUBTRACT $\mathbf{r}$ FROM $\mathbf{y}$ — 88

SUPPLY TO CONTROL DEVICE AS $\mathbf{y_C}$ — 90

FIG. 5

RECEIVE $\mathbf{u_C}$ — 104

GENERATE $\mathbf{r'}$ — 106

APPLY $\hat{N}_u$ — 108

ADD TO $\mathbf{u_C}$ — 110

SUPPLY TO RANGE LIMITER — 112

RECEIVE $\mathbf{u}$ — 114

SUBTRACT $\mathbf{u_C}$ FROM $\mathbf{u}$ — 116

APPLY $\hat{N}_u^{-1}$ — 118

PROVIDE $\mathbf{r}$ — 120

APPLY $\mathbf{r}$ IN $\hat{N}_y^{-1}\hat{G}_L$ — 122

RECEIVE $\mathbf{y}$ — 124

SUBTRACT PROCESSED $\mathbf{r}$ FROM $\mathbf{y}$ — 126

SUPPLY AS $\mathbf{y_C}$ — 128

FIG. 7

Europäisches
Patentamt

European
Patent Office

Office européen
des brevets

**EUROPEAN SEARCH REPORT**

Application Number

EP 13 16 6342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/130850 A1 (ZHENG QINGSHENG QUINN [US] ET AL) 2 June 2011 (2011-06-02) * paragraph [0002] - paragraph [0004] * * paragraph [0056] - paragraph [0061] * ----- | 1,11, 18-20 | INV. G05B13/04 |
| A | US 2012/046762 A1 (PANTAZI ANGELIKI [CH] ET AL) 23 February 2012 (2012-02-23) * paragraph [0001] - paragraph [0004] * * paragraph [0018] - paragraph [0053] * ----- | 1,11, 18-20 | |
| A | US 2007/073422 A1 (GAIKWAD SUJIT V [US] ET AL) 29 March 2007 (2007-03-29) * paragraph [0016] - paragraph [0024] * ----- | 1,11, 18-20 | |

| | | | TECHNICAL FIELDS SEARCHED (IPC) |
|---|---|---|---|
| | | | G05B |

The present search report has been drawn up for all claims

| Place of search | Date of completion of the search | Examiner |
|---|---|---|
| The Hague | 10 October 2013 | Cîrîc, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 735 924 A1

**ANNEX TO THE EUROPEAN SEARCH REPORT
ON EUROPEAN PATENT APPLICATION NO.**                    EP 13 16 6342

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2013

| Patent document cited in search report | Publication date | Patent family member(s) | Publication date |
|---|---|---|---|
| US 2011130850 A1 | 02-06-2011 | CA 2762484 A1 | 02-12-2010 |
| | | EP 2419796 A1 | 22-02-2012 |
| | | JP 2012528392 A | 12-11-2012 |
| | | US 2011130850 A1 | 02-06-2011 |
| | | WO 2010138452 A1 | 02-12-2010 |
| US 2012046762 A1 | 23-02-2012 | NONE | |
| US 2007073422 A1 | 29-03-2007 | CN 101317141 A | 03-12-2008 |
| | | EP 1938156 A1 | 02-07-2008 |
| | | JP 2009510606 A | 12-03-2009 |
| | | US 2007073422 A1 | 29-03-2007 |
| | | WO 2007040953 A1 | 12-04-2007 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007001252 A

- US 20060111858 A

**Non-patent literature cited in the description**

- **RENATO N. PITTA ; DARCI ODLOAK.** Closed-loop re-identification of an industrial debutanizer column. *8th IFAC Symposium on Advanced Control of Chemical Processes, Singapore,* 10 July 2012

- **MIN WU ; CHUNSENG WANG ; WEIHUA CAO ; XUZHI LAI ; XIN CHEN.** Design and application of generalized predictive control strategy with closed-loop identification for burn through point in sintering process. *Control Engineering Practice,* 2012, 20